# EUROPÄISCHE PATENTANMELDUNG

(11) **EP 3 181 984 A1**
(43) Veröffentlichungstag der Anmeldung: **21.06.2017**
(21) Anmeldenummer: 16002503.7
(22) Anmeldetag: 24.11.2016
(51) Int. Cl.: F17C 7/00, F17C 13/02

(54) **VORRICHTUNG UND VERFAHREN ZUR MESSUNG EINER WASSERSTOFFMENGE**

(30) Priorität: 15.12.2015 DE 102015016329
(71) Anmelder: Linde Aktiengesellschaft, 80331 München (DE)
(72) Erfinder: Adler, Robert, 2201 Gerasdorf (AT); Stephan, Markus, 2392 Dornbach (AT); Stefan, Michael, 2492 Zillingdorf (AT); Nagl, Christoph, 2534 Alland (AT)

(57) **Zusammenfassung**

Die Erfindung betrifft ein Verfahren und die entsprechende Vorrichtung zur Bestimmung einer abgegebenen Masse von komprimiertem Wasserstoff (2) aus mindestens einem Konstantdruckspeicher (4), wobei die Masse einer Flüssigkeit (1), welche dem mindestens einen Konstantdruckspeicher (4) zur Aufrechterhaltung des Drucks aus einem Flüssigkeitsspeicher (8) zugeführt werden muss, gemessen wird. Hierzu können unterschiedliche Messmethoden verwendet werden.

## Beschreibung

Die Erfindung betrifft ein Verfahren zur Bestimmung einer abgegebenen Masse von komprimiertem Wasserstoff aus mindestens einem Konstantdruckspeicher sowie eine Konstantdruckspeichereinheit bestehend aus mindestens einem Flüssigkeitsspeicher für eine Flüssigkeit, welcher mit mindestens einem Konstantdruckspeicher, zur Speicherung von Wasserstoff, in Verbindung steht.

Die Abgabe von Gasen aus Hochdruckspeichern, das bedeutet bei Drücken über 300 bar, spielt insbesondere bei Tankstellen, welche zur Betankung von Fahrzeugen mit gasförmigen Kraftstoff, beispielsweise Wasserstoff ausgestaltet sind eine große Rolle. Bei der Abgabe von Gasen, besonders im Druckbereich von 500 bis 1000 bar, weisen herkömmliche Messverfahren der Massedurchflussmessung große Ungenauigkeiten im Bereich von 5 bis 15 % auf.

Die Eichung der Massedurchflussmessgeräte über Vergleichsmessungen mit Turbinenmessgeräten oder Waagen ist nicht oder nur schwer möglich. Es fehlen entweder die entsprechenden Geräte für den angegebenen Druckbereich oder der Masseunterschied, zwischen zu messendem Medium und notwendigem Druckbehälter, ist für eine exakte Wägung zu groß. Besonders bei der Abgabe von Wasserstoff an einer Tankstelle an einen Kunden wird jedoch eine große Messgenauigkeit vorausgesetzt.

Aufgabe der vorliegenden Erfindung ist es ein Messverfahren für die Menge an Wasserstoff anzugeben, welche aus einem Konstantdruckspeicher abgegeben wird.

Verfahrensseitig wird die Aufgabe dadurch gelöst, dass die Masse einer Flüssigkeit, welche dem mindestens einen Konstantdruckspeicher zur Aufrechterhaltung des Drucks aus einem Flüssigkeitsspeicher zugeführt werden muss, gemessen wird.

Ein Konstantdruckspeicher umfasst im Allgemeinen einen Zylinder, welcher durch einen beweglichen Trennkolben in zwei Bereiche aufgeteilt ist. Ein erster Bereich ist zur Aufnahme eines Gases ausgebildet und ein zweiter Bereich zur Aufnahme einer Flüssigkeit. Als Gas wird insbesondere Wasserstoff oder Erdgas verwendet.

Konstantdruckspeicher sind dazu vorgesehen Verbrauchern ein Gas mit einem bestimmten, konstanten Druck zur Verfügung zu stellen und zählen so zur Gruppe der Gasdruckspeicher. In der Regel ist der Druck in einem Gasspeicher abhängig von dessen Füllstand und der Druck muss beispielsweise über Verdichter bei der Abgabe an den Verbraucher angepasst werden. Die Abgabe von Gas mit einem konstanten Druck ist vor allem bei Betankungsvorgängen, also dem befüllen kleinerer, mobiler oder stationärer Speichertanks hilfreich. Der Tankvorgang ist einfacher auslegbar, bei konstanten Druckverhältnissen. Zudem kann ein Druck gewählt werden, bei dem ein einfaches Überströmen des Gases realisiert werden kann. Die Konstantdruckspeicher selbst können durch mobile Einrichtungen, wie zum Beispiel durch entsprechende Tankfahrzeuge oder auch stationär, beispielsweise durch Druckerhöhungsanlagen, in einer Einspeicherphase befüllt werden.

Das Prinzip eines Konstantdruckspeichers beruht darauf, dass während einer Einspeicherphase der Druck des Gases im ersten Bereich durch Vergrößerung des Volumens im ersten Bereich konstant gehalten wird, dadurch, dass sich der Trennkolben verschiebt und das Volumen des zweiten Bereiches kleiner wird. Während der Ausspeicherphase wird das Volumen des ersten Bereiches verkleinert in dem mehr Flüssigkeit in den zweiten Bereich gefördert wird und so das Volumen des zweiten Bereiches vergrößert wird, so dass wiederum der Druck im ersten Bereich konstant gehalten wird.

Dadurch, dass nun anstelle des aus- oder einströmenden Wasserstoffs in oder aus dem Konstantdruckspeicher, die Menge an Flüssigkeit gemessen wird, die in oder aus dem Konstantdruckspeicher strömt, können genauere Messungen durchgeführt werden. Über die Menge an Flüssigkeit, die notwendig ist um den Druck im Konstantdruckspeicher konstant zu halten, und die deshalb in oder aus dem Konstantdruckspeicher gefördert wird kann auf die Menge an Wasserstoff geschlossen werden. Die Messung der Menge an Flüssigkeit, also der Masse oder dem Volumen, kann als alleinige Messmethode verwendet werden oder zur Kalibrierung oder Eichung eines Massedurchflussmessers für Wasserstoff. Das heißt die Messung der Flüssigkeit kann ständig erfolgen oder nur für die Dauer, in der die Kalibrierung und Eichung der Massedurchflussmesser für Wasserstoff durchgeführt werden.

Da die Flüssigkeit nur bei Umgebungstemperatur also zwischen -45 °C und +80 °C, insbesondere zwischen -40 °C und +60 °C, vorliegt können konventionelle Messvorrichtungen angewendet werden. Auch für hohe Drücke in Bereichen von 235 bis 5000 bar, bevorzugt bei 301 bar bis 1200 bar, insbesondere bei 620, 850, 900 oder 1000 bar sind für Flüssigkeiten, im Gegensatz zu Gasen, Messvorrichtungen verfügbar.

Eine Konstantdruckspeichereinheit umfasst im Allgemeinen einen oder mehrere Konstantdruckspeicher, eine Flüssigkeitsversorgung, also mindestens eine Flüssigkeitspumpe und mindestens einen Speicherbehälter für die Flüssigkeit und gegebenenfalls eine Gaskonditioniereinheit zur Anpassung des Gases an die Anforderungen an den Verbraucher. Es versteht sich, dass außerdem unterschiedliche Ventile, Regler und Sensoren zum Betrieb der Anlage vorhanden sind. Bei der Verwendung von Konstantdruckspeichern kann auf Verdichter oder Kompressoren zwischen dem Konstantdruckspeicher und dem Verbraucher verzichtet werden. Investitions- und Wartungskosten können so gesenkt werden.

Zur Messung der Masse der Flüssigkeit kann deshalb bevorzugt ein Massedurchflussmesser oder ein Volumendurchflussmesser zwischen einem Flüssigkeitsspeicher und mindestens einem Konstantdruckspeicher verwendet werden. Falls mehrere Konstantdruckspeicher verwendet werden, aber nur ein Flüssigkeitsspeicher kann ebenfalls nur eine Messvorrichtung verwendet werden, oder für jeden Konstantdruckspeicher eine separate Messvorrichtung. In letzterem kann nicht nur die Gesamtmenge an Flüssigkeit oder Wasserstoff bestimmt werden, sondern auch detailliert die Menge in oder aus jedem einzelnen Konstantdruckspeicher.

Eine andere bevorzugte Ausgestaltung sieht vor, dass die abgegebene Masse der Flüssigkeit aus dem Flüssigkeitsspeicher in den mindestens einen Konstantdruckspeicher über eine Messvorrichtung im Flüssigkeitsspeicher gemessen wird. Dazu können Sensoren, beispielsweise Niveausensoren wie Ultraschallsensoren, Drucksensoren oder Wegemesssysteme mit Schwimmern, die die Veränderungen im Füllstand des Flüssigkeitsspeichers erfassen können, als Messvorrichtung installiert sein. Falls mehrere Konstantdruckspeicher mit nur einem Flüssigkeitsspeicher verbunden sind, kann so nur die Gesamtmenge an abgegebener Flüssigkeit und der entsprechenden Wasserstoffmenge ermittelt werden. Falls eine detaillierte Erfassung notwendig ist können mehrere Flüssigkeitsspeicher verwendet werden.

Eine weitere vorteilhafte Ausgestaltung sieht vor, dass die abgegebene Masse der Flüssigkeit aus dem Flüssigkeitsspeicher in den mindestens einen Konstantdruckspeicher über eine Wägung des Flüssigkeitsspeichers gemessen wird. Die Wägung ist bei der Messung des Wasserstoffs direkt aufgrund des großen Gewichtsunterschieds zwischen Wasserstoffmenge und Druckbehälter nur schwer zu realisieren. Die Wägung von Flüssigkeit in einem Speicherbehälter ist jedoch mit dem Fachmann bekannten Mitteln durchführbar. Falls mehrere Konstantdruckspeicher mit nur einem Flüssigkeitsspeicher verbunden sind, kann so nur die Gesamtmenge an abgegebener Flüssigkeit und der entsprechenden Wasserstoffmenge ermittelt werden. Falls eine detaillierte Erfassung notwendig ist können mehrere Flüssigkeitsspeicher verwendet werden und auch mehrere Waagen.

Der Druck des Wasserstoff in dem mindestens einen Konstantdruckspeicher liegt bei 235 bis 5000 bar, bevorzugt bei 301 bis 1200 bar und insbesondere bei 620, 850, 900 oder 1000 bar.

Die Temperatur der Flüssigkeit liegt bei Umgebungstemperatur also zwischen -45 °C und +80 °C und die Temperatur des komprimierten Wasserstoffs ebenfalls bei -45 °C und +80 °C.

Da die diversen physikalischen und chemischen Parameter der Flüssigkeit und des Wasserstoff bekannt sind, kann die Menge an Wasserstoff auch berechnet werden, wenn bei der Flüssigkeit die Masse oder das Volumen bestimmt wird.

Als Flüssigkeit wird bevorzugt Wasser oder eine schwer entflammbare Hydraulikflüssigkeit, welche Wasser und Polyglykol enthalten kann (z.B. HFC) oder eine mineralölbasierte Hydraulikflüssigkeit (z.B. HLP) verwendet.

Vorrichtungsseitig wird die Konstantdruckspeichereinheit so ausgestattet, dass die Konstantdruckspeichereinheit eine Messvorrichtung zur Bestimmung der Masse an Flüssigkeit in dem mindestens einen Konstantdruckspeicher umfasst. Insbesondere ist die Messvorrichtung ein Massedurchflussmesser oder ein Volumenmessgerät, welche über eine Flüssigkeitspumpe mit dem Flüssigkeitsspeicher und dem mindestens einen Konstantdruckspeicher in Verbindung steht. Bevorzugt ist die Messvorrichtung ein Waage, welche mit dem Flüssigkeitsspeicher in Verbindung steht oder ein Füllstandsmesser, welcher innerhalb oder am Flüssigkeitsspeicher angebracht ist. Der Füllstand kann beispielsweise über einen Ultraschallsensor gemessen werden oder über andere Niveausensoren, wie Drucksensoren oder Wegemesssysteme mit Schwimmern, die die Veränderungen im Füllstand des Flüssigkeitsspeichers erfassen können.

Vorteile einer erfindungsgemäßen Messvariante liegen darin, dass die Menge an Wasserstoff, die über eine Konstantdruckspeichereinheit abgegeben wird, genau bestimmt werden kann, ohne dass hierzu spezielle teure Installationen vorgesehen werden müssen. Zudem kann nicht nur die abgegeben Menge an Wasserstoff während der Ausspeicherphase bestimmt werden, sondern auch die Menge an eingespeichertem Wasserstoff, indem die Flüssigkeitsmenge gemessen wird, die in den Flüssigkeitsspeicher zurückgeführt wird. So ist immer exakt bekannt welche Menge an Wasserstoff noch in den Speichern vorhanden ist.

Es ist weiterhin denkbar, dass mehrere der genannten Messvarianten gleichzeitig genutzt werden um die Messungen gegeneinander abzusichern und die Anlage redundant auszulegen.

Weitere Merkmale und Vorteile der Erfindung sollen nachfolgend bei der Beschreibung von Ausführungsbeispielen anhand der Figuren erläutert werden. Identische Bestandteile der Konstantdruckspeichereinheit sind mit den gleichen Bezugszeichen gekennzeichnet und werden nicht separat erläutert. Es zeigen:
- Fig. 1:: Konstantdruckspeichereinheit mit Masse- oder Volumendurchflussmessgerät
- Fig. 2:: Konstantdruckspeichereinheit mit Waage für den Speicherbehälter
- Fig. 3:: Konstantdruckspeichereinheit mit Füllstandsensor

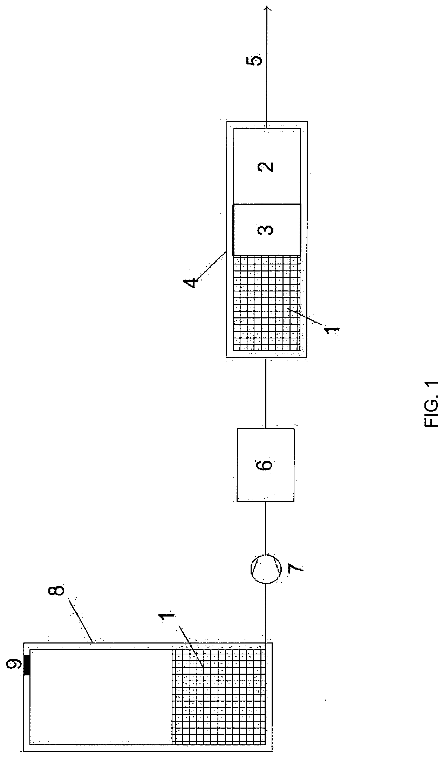

Figur 1 zeigt eine Konstantdruckspeichereinheit bestehend vor allem aus einem Speicherbehälter 8 und einem Konstantdruckspeicher 4. Es können jedoch auch mehrere Konstantdruckspeicher mit einem Speicherbehälter verbunden sein, oder innerhalb einer Konstantdruckspeichereinheit mehrere Speicherbehälter und mehrere Konstantdruckspeicher vorhanden sein.

Der Konstantdruckspeicher 4 dient zur Speicherung von komprimiertem Wasserstoff 2, bei 900 bar und einer Temperatur von -40 °C bis 80 °C. Um den Druck des komprimierten Wasserstoffs 2 konstant zu halten wird ein beweglicher Trennkolben 3 von einer Flüssigkeit 1 bewegt. Die Flüssigkeit wird über eine Flüssigkeitspumpe 7 in der Ausspeicherphase des Konstantdruckspeichers, also während der Abgabe von Wasserstoff, aus einem Flüssigkeitsspeicher 8 in den Konstantdruckspeicher 4 gefördert und bewegt so den Trennkolben 3 und hält den Druck des komprimierten Wasserstoffs 2 konstant, da das vorhandene Volumen des Gasbereiches verkleinert wird. Der komprimierte Wasserstoff wird über Leitung 5 abgegeben. In der Einspeicherphase wird über Leitung 5, dem Konstantdruckspeicher 4 komprimierter Wasserstoff 2 zugeführt. Dabei wird der Trennkolben 3 in die andere Richtung bewegt und die Flüssigkeit 1 zurück in den Flüssigkeitsspeicher 8 gefördert. In Figur 1 ist zwischen der Flüssigkeitspumpe 7 und dem Konstantdruckspeicher 1 ein Massedurchflussmesser oder ein Volumendurchflussmesser angeordnet. Mit Hilfe dieser Messvorrichtung wird die Menge an Flüssigkeit detektiert, welche in den Konstantdruckspeicher gefördert wird. Über die notwendige Masse an Flüssigkeit, um den Druck im Konstantdruckspeicher aufrechtzuhalten, kann auf die Masse an komprimierten Wasserstoff 2 geschlossen werden, welcher über Leitung 5 abgegeben wurde. Umgekehrt kann über die Masse an Flüssigkeit, welche während der Einspeicherphase zurück in den Speicherbehälter gefördert wird, geschlossen werden wie viel Masse des komprimierten Wasserstoffs 2 in den Konstantdruckspeicher eingelagert wurde.

Bei der Flüssigkeitspumpe handelt es sich um eine Kolbenpumpe mit einer Förderleistung zwischen 10 und 150 L/min bei einer Temperatur von -40 bis + 60 °C. Es versteht sich, dass innerhalb der Leitungen Ventile und Kontroll- sowie Regelinstrumente angebracht sein können, die dem Fachmann bekannt sind und eine sichere Handhabung der Anlage möglich machen.

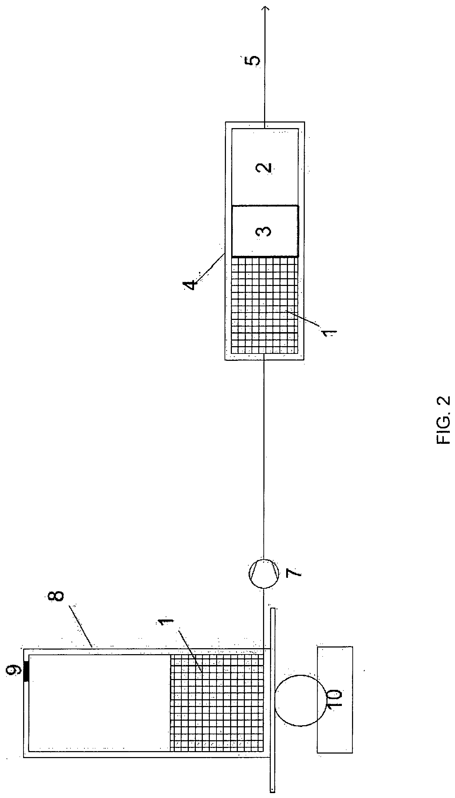

In Figur 2 ist eine Ausführungsform dargestellt, in dem die Masse an Flüssigkeit nicht über ein Masse- oder Volumendurchflussmessgerät festgelegt wird sondern über eine Waage 10. Hierfür wird der Flüssigkeitsspeicher 8 auf einer Waage 10 platziert, so dass die Gewichtsänderung gemessen werden kann, wenn Flüssigkeit in der Ausspeicherphase des Konstantdruckspeichers aus und in der Einspeicherphase des Konstantdruckspeichers eingelagert wird. Die Waage weist bei einem Gewichtsbereich bis zu 1 t, nur eine Ungenauigkeit von +/- 0,1% auf.

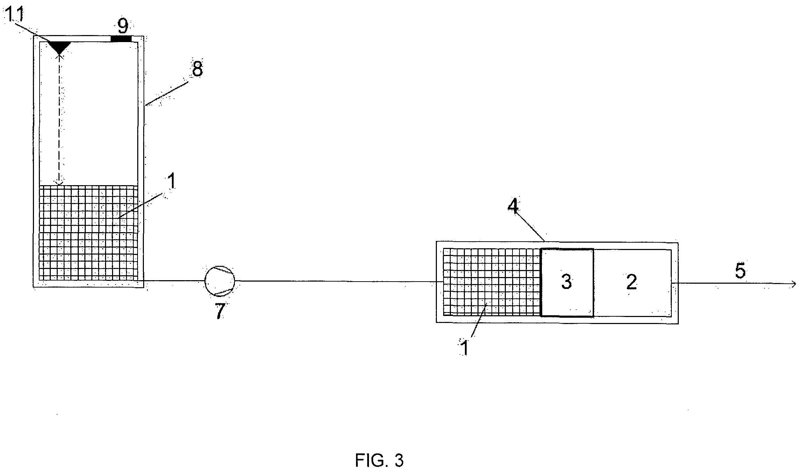

In Figur 3 ist eine Ausführungsform dargestellt, in dem der Flüssigkeitsspeicher 8 einen Messvorrichtung 11 aufweist. Über die Messvorrichtung, welcher als Ultraschallsensor ausgeführt ist, kann ebenfalls die Masse an Flüssigkeit bestimmt werden, welche in der Ausspeicherphase des Konstantdruckspeichers aus und in der Einspeicherphase des Konstantdruckspeichers eingelagert wird. Hierzu kann zusätzlich ein Temperatursensor im Speicherbehälter angebracht sein.

### Liste der Bezugszeichen:

- 1: Flüssigkeit
- 2: Gas
- 3: Trennkolben
- 4: Konstantdruckspeicher
- 5: Gasleitung
- 6: Masse- oder Volumendurchflussmesser
- 7: Flüssigkeitspumpe
- 8: Flüssigkeitsspeicher
- 9: Sicherheitsventil
- 10: Waage
- 11: Messvorrichtung

## Patentansprüche

1. Verfahren zur Bestimmung einer abgegebenen Masse von komprimiertem Wasserstoff (2) aus mindestens einem Konstantdruckspeicher (4), **dadurch gekennzeichnet, dass** die Masse einer Flüssigkeit (1), welche dem mindestens einen Konstantdruckspeicher (4) zur Aufrechterhaltung des Drucks aus einem Flüssigkeitsspeicher (8) zugeführt werden muss, gemessen wird.

2. Verfahren nach Anspruch 1, **dadurch gekennzeichnet, dass** zur Messung der Masse der Flüssigkeit (1) ein Massedurchflussmesser oder ein Volumendurchflussmesser zwischen dem Flüssigkeitsspeicher (8) und dem mindestens einem Konstantdruckspeicher (4) verwendet wird.

3. Verfahren nach Anspruch 1, **dadurch gekennzeichnet, dass** die abgegebene Masse der Flüssigkeit (1) aus dem Flüssigkeitsspeicher (8) in den mindestens einen Konstantdruckspeicher (4) über eine Messvorrichtung (11) im Flüssigkeitsspeicher (8) gemessen wird.

4. Verfahren nach Anspruch 1, **dadurch gekennzeichnet, dass** die abgegebene Masse der Flüssigkeit (1) aus dem Flüssigkeitsspeicher (8) in den mindestens einen Konstantdruckspeicher (4) über eine Wägung des Flüssigkeitsspeichers (8) gemessen wird.

5. Verfahren nach mindestens einem der Ansprüche 1 bis 4, **dadurch gekennzeichnet, dass** der Druck in dem mindestens einen Konstantdruckspeicher (4) bei 235 bis 5000 bar, bevorzugt bei 301 bis 1200 bar und insbesondere bei 620, 850, 900 oder 1000 bar liegt.

6. Verfahren nach mindestens einem der Ansprüche 1 bis 5, **dadurch gekennzeichnet, dass** die Temperatur der Flüssigkeit (1) bei -40 °C bis 80 °C und die Temperatur des komprimierten Wasserstoffs (2) bei -40 °C bis 80 °C liegt.

7. Konstantdruckspeichereinheit bestehend aus mindestens einem Flüssigkeitsspeicher (8) für eine Flüssigkeit (1), welcher mit mindestens einem Konstantdruckspeicher (4), zur Speicherung von Wasserstoff (2), in Verbindung steht, **dadurch gekennzeichnet, dass** die Konstantdruckspeichereinheit eine Messvorrichtung, zur Bestimmung der Masse an Flüssigkeit (1) in dem mindestens einen Konstantdruckspeicher (4), umfasst.

8. Konstantdruckspeichereinheit nach Anspruch 7, **dadurch gekennzeichnet, dass** die Messvorrichtung ein Massendurchflussmesser oder ein Volumenmessgerät ist, welche über eine Flüssigkeitspumpe (7) mit dem Flüssigkeitsspeicher (8) und dem mindestens einen Konstantdruckspeicher (4) in Verbindung steht.

9. Konstantdruckspeichereinheit nach Anspruch 8, **dadurch gekennzeichnet, dass** die Messvorrichtung ein Waage (10) ist, welche mit dem Flüssigkeitsspeicher (8) in Verbindung steht oder ein Füllstandsmesser (11), welcher innerhalb oder am Flüssigkeitsspeicher (8) angebracht ist.
